# FASCICULE DE BREVET EUROPEEN

(11) **EP 3 837 393 B1**
(45) Date de publication et mention de la délivrance du brevet: **05.03.2025**
(21) Numéro de dépôt: 19761756.6
(22) Date de dépôt: 13.08.2019
(51) Int. Cl.: D21B 1/32

(54) **PROCÉDÉ DE TRAITEMENT DES MATIÈRES ULTIMES ISSUES DE PAPETERIES ET INSTALLATION DE TRAITEMENT METTANT EN OEUVRE LEDIT PROCÉDÉ**
VERFAHREN ZUR BEHANDLUNG VON PAPIERENDPRODUKTEN UND BEHANDLUNGSANLAGE ZUR ANWENDUNG DIESES VERFAHRENS
METHOD FOR TREATING PAPER END-PRODUCTS AND TREATMENT FACILITY EMPLOYING THE SAID METHOD

(30) Priorité: 14.08.2018 FR 1857489
(43) Date de publication de la demande: 23.06.2021
(73) Titulaire: Rossmann, 67600 Selestat (FR)
(72) Inventeur: BOURION, Raynald, 88600 AYDOILLES (FR); DORLENCOURT, Michel, 78200 BOISSY MAUVOISIN (FR); MATTER, Dany, 67730 BOUXWILLER (FR); WALTER, Thierry, 67730 LA VANCELLE (FR)
(74) Mandataire: Cabinet Laurent & Charras
(86) Numéro de dépôt international: PCT/EP2019/071669
(87) Numéro de publication internationale: WO 2020/035476

(56) Documents cités:
- EP-B1- 0 570 757
- WO-A1-2008/007204

## Description

### Domaine technique :

La présente invention concerne un procédé et une installation de traitement des matières ultimes issues de papeteries, ces matières ultimes étant récupérées à la sortie de machines de désintégration, appelées pulpeurs, agencées pour déchiqueter, désintégrer, triturer des vieux papier et cartons recyclés pour en extraire une pulpe composée de fibres de cellulose et d'eau qui va alimenter un circuit de préparation de la pâte à papier, ces matières ultimes comportant encore des fibres de cellulose contaminées par des matières diverses contenant au moins une fraction de matières métalliques, une fraction de matières synthétiques et une fraction de matières cellulosiques.

### Technique antérieure :

La matière première des papeteries provient essentiellement du recyclage des vieux papiers, journaux, cartons, etc. qui sont récupérés par des centres de collecte, et conditionnés en sacs ou en balles, les balles étant généralement cerclées par du fil de fer ou similaire. La part de ces déchets de papier recyclés peut représenter jusqu'à 90 à 95% de la matière première des papeteries. Les balles sont envoyées dans des machines appelées « pulpeurs » ou « désintégrateurs » où elles sont ouvertes, déchiquetées, désintégrées et triturées pour en extraire les fibres de cellulose. Ces machines sont généralement constituées d'une cuve cylindrique alimentée en eau et dans laquelle un rotor, qui effectue la désintégration de la balle de papier, permet d'extraire des fibres de cellulose individuelles, indépendantes les unes des autres, et de les mettre en suspension dans l'eau pour former une pulpe qui est envoyée dans un circuit de préparation de la pâte à papier.

Toutefois, ces sacs ou balles de vieux papiers recyclés sont contaminés par toutes sortes de matières autres que des fibres de cellulose, tels que des matières plastiques, des polystyrènes expansés, des colles, des encres, des métaux, de la ferraille, du bois, etc... et par des fils de fer ou similaire servant par exemple au cerclage des balles. Ces autres matières, appelées par la suite « matières ultimes » peuvent représenter environ 8% du poids total d'une balle. En effet, il faut par exemple une balle de 1,08 tonne pour produire 1 tonne de papier. Ces matières ultimes comportent à la fois des torons formés par la ferraille entrelacée à hauteur d'environ 20% extraits des pulpeurs par des grappins accédant à la cuve par son ouverture en partie supérieure, et des matières restantes au fond des pulpeurs à hauteur d'environ 80% évacués lors de la vidange des cuves par un conduit de vidange situé en partie inférieure. En outre, l'ensemble de ces matières ultimes comportent une part non négligeable de fibres de cellulose non récupérées par les pulpeurs, car intimement liées aux matières ultimes. Cette part non négligeable de fibres de cellulose s'élève à environ 50% et représente une perte sèche pour les papeteries.

Jusqu'à présent, les matières ultimes de papeteries sont traitées majoritairement comme des déchets ultimes et ne sont pas ou peu valorisées. Elles sont pour la plupart enfouies ou incinérées. Elles représentent pour les papeteries des dépenses importantes car elles ont l'obligation de prendre en charge tous les frais générés par l'évacuation et la valorisation de leurs matières ultimes. A titre d'exemple, le coût d'une mise en décharge pour enfouissement ou d'une incinération est de l'ordre de 150 euros par tonne de matières ultimes. Ainsi, pour une papeterie qui produit par exemple 40.000 tonnes de papier par an, l'évacuation de ses matières ultimes représente une dépense obligatoire et incompressible d'environ 480.000 euros par an, ce qui est bien entendu un coût exorbitant.

Cette situation va aller en se dégradant sachant que le taux de matières ultimes dans les papiers de récupération va continuer de croître et la capacité de production va encore augmenter dans les prochaines années. Ainsi, le coût global de traitement des matières ultimes continuera inévitablement sa courbe ascendante devenant un coût insupportable pour les papeteries. En outre, cette situation va générer de nombreux inconvénients liés à l'augmentation du nombre de décharges, la consommation inutile d'énergie pour évaporer l'eau contenue dans les matières ultimes, l'anéantissement de matériaux recyclables dont la fibre de papier issue du bois, la dégradation de notre écosystème, etc.

Les papeteries cherchent aujourd'hui des solutions pour valoriser au maximum leurs matières ultimes afin de réduire leurs dépenses et de s'inscrire dans une démarche d'économie circulaire, laquelle veut que le déchet d'une industrie soit recyclé en matière première d'une autre industrie ou de la même.

Des solutions de tri et de recyclage des déchets en général visant à récupérer notamment des fibres de cellulose sont connues depuis de nombreuses années. On peut citer à titre d'exemple les publications WO 1992/016686 A1, EP 0 570 757 B1, WO 1995/007810 A1 et WO 2008/007204 A1. Mais aucune ne permet de répondre aux besoins des papeteries de disposer une ligne de traitement relativement simple et peu énergivore permettant de valoriser au moins 98% des matières ultimes produites et de récupérer la quasi-totale des fibres de cellulose liées intimement à ces matières ultimes.

### Exposé de l'invention :

La présente invention vise à apporter une solution de valorisation des matières ultimes qui s'inscrit dans le développement durable et qui permet d'engendrer des économies importantes à la fois sur le poste « traitement des matières ultimes en décharge ou en incinérateur avec transport » et sur le poste « achat de matière première réutilisable » des papeteries au moyen d'une ligne de traitement relativement simple et peu énergivore, permettant d'extraire la quasi-totalité des fibres de cellulose (jusqu'à 99%) liées intimement aux matières ultimes pour les valoriser directement en les réinjectant dans le circuit de préparation de la pâte à papier. Elle se propose également d'extraire séparément les contaminants tels que les matières synthétiques et les matières métalliques afin de permettre leur valorisation dans des filières dédiées telles qu'en plasturgie et en sidérurgie, ces contaminants étant traités mécaniquement, sans altérer leurs propriétés physiques et chimiques, afin qu'ils conservent leurs caractéristiques initiales et puissent être recyclés et réutilisés.

Dans ce but, l'invention concerne un procédé du genre indiqué en préambule, dans lequel l'on récupère lesdites matières ultimes chargées en humidité à plus de 50% en masse, dans lequel l'on effectue les opérations de traitement dudit procédé sur lesdites matières ultimes chargées en humidité, et dans lequel, parmi lesdites opérations de traitement, l'on procède chronologiquement au moins aux opérations suivantes :
1) broyage et/ou déchiquetage desdites matières ultimes chargées en humidité en parcelles calibrées,
2) séparation mécanique de ladite fraction de matières métalliques desdites matières ultimes, afin de pouvoir la valoriser au moins en partie en sidérurgie,
3) séparation mécanique de ladite fraction de matières synthétiques de ladite fraction de matières cellulosiques, afin de pouvoir la valoriser au moins en plasturgie, et
4) séparation mécanique des fibres de cellulose de ladite fraction de matières cellulosiques, afin de pouvoir les valoriser en les réinjectant dans ledit circuit de préparation de la pâte à papier des papeteries.

L'on peut récupérer lesdites matières ultimes chargées en humidité à hauteur de 70 à 80% en masse.

Dans certains cas, lesdites matières ultimes peuvent comporter des torons formés à partir de matières métalliques filaires et extraits desdits pulpeurs. Dans ce cas, parmi lesdites opérations de traitement, l'on procède de préférence à une opération de broyage et/ou déchiquetage préalable desdits torons en parcelles d'un premier calibre correspondant par exemple à une dimension maximale comprise entre 150 et 300mm, et de préférence égale à 250mm, et l'on ajoute lesdits torons réduits en parcelles dans lesdites matières ultimes chargées en humidité.

L'on procède avantageusement à une opération de broyage et/ou déchiquetage desdites matières ultimes chargées en humidité, additionnées selon le cas desdits torons réduits en parcelles, en parcelles d'un deuxième calibre, inférieur au premier calibre, et correspondant par exemple à une dimension maximale comprise entre 60 et 100mm, et de préférence égale à 80mm.

L'on peut ensuite procéder à une première opération de séparation desdites matières ultimes réduites en parcelles dans laquelle on sépare mécaniquement ladite fraction de matières métalliques des autres fractions de matières synthétiques et cellulosiques.

Pour effectuer ladite première opération de séparation, l'on peut utiliser la différence de magnétisme desdits matériaux, et l'on peut procéder en deux étapes dans lesquelles on sépare d'une part les parcelles de matières métalliques magnétiques, et d'autre part les parcelles de matières métalliques amagnétiques.

Après ladite première opération de séparation, l'on peut effectuer une étape de nettoyage par vibration mécanique pour débarrasser lesdites parcelles de matières métalliques magnétiques et/ou amagnétiques des autres matières cellulosiques et synthétiques restantes, et l'on peut ainsi récupérer ladite fraction de matières métalliques nettoyée pour la valoriser dans des filières dédiées.

L'on procède ensuite avantageusement à une seconde opération de séparation desdites matières ultimes réduites en parcelles débarrassées de ladite fraction de matières métalliques, dans laquelle on sépare ladite fraction de matières cellulosiques de l'autre fraction de matières synthétiques.

Pour effectuer la seconde opération de séparation, l'on peut utiliser la différence de densité massique desdits matériaux, et l'on peut récupérer d'une part la fraction de matières cellulosiques qui tombe par gravité, et d'autre part la fraction de matières synthétiques qui reste en suspension par aspiration.

De manière avantageuse, l'on peut procéder par centrifugation en présence d'eau et par battage simultané, ladite fraction de matières cellulosiques chargée en eau tombant à travers un tamis d'un troisième calibre inférieur au deuxième calibre, et correspondant par exemple à une dimension maximale comprise entre 4 et 8mm et de préférence égale à 6mm, et l'on peut ainsi acheminer la fraction de matières cellulosiques réduite vers ledit circuit de préparation de la pâte à papier des papeteries.

De préférence, l'on fait passer ladite fraction de matières cellulosiques réduite à travers un poste d'épuration agencé pour séparer les fibres de cellulose de ladite fraction de matières cellulosiques pour les valoriser dans ledit circuit de préparation de la pâte à papier des papeteries.

D'autre part, l'on peut acheminer la fraction de matières synthétiques récupérée par aspiration vers un compacteur et un broyeur granulateur pour les valoriser. Dans ce cas et préalablement, l'on peut séparer la fraction lourde de la fraction légère desdites matières synthétiques.

Dans ce but, l'invention concerne également une installation du genre indiqué en préambule, agencée pour mettre en œuvre ledit procédé de traitement et pour travailler sur des matières ultimes chargées en humidité à plus de 50% en masse et de préférence entre 70 et 80% en masse, et comportant au moins :
1) un poste de broyage et/ou de déchiquetage agencé pour broyer et/ou déchiqueter lesdites matières ultimes chargées en humidité en parcelles calibrées,
2) un poste de tri métallique agencé pour séparer mécaniquement ladite fraction de matières métalliques desdites matières ultimes afin de pouvoir la valoriser au moins en partie en sidérurgie,
3) un poste de tri cellulosique agencé pour séparer mécaniquement ladite fraction de matières synthétiques afin de pouvoir la valoriser au moins en plasturgie, de ladite fraction de matières cellulosiques, et
4) un poste d'épuration agencé pour séparer les fibres de cellulose de ladite fraction de matières cellulosiques afin de pouvoir les valoriser en les réinjectant dans ledit circuit de préparation de la pâte à papier des papeteries.

Dans le cas où lesdites matières ultimes comportent des torons formés à partir de matières métalliques filaires et extraits desdits pulpeurs, ladite installation peut comporter au moins un poste de broyage et/ou de déchiquetage pour métaux agencé pour broyer et/ou déchiqueter lesdits torons en parcelles d'un premier calibre, dont la dimension maximale est par exemple comprise entre 150 et 300mm, et de préférence égale à 250mm, et des moyens pour ajouter lesdits torons réduits en parcelles dans les matières ultimes chargées en humidité.

Ledit poste de broyage et/ou de déchiquetage pour métaux comporte avantageusement au moins un broyeur et/ou un déchiqueteur à métaux pourvu d'un rotor de cisaillement complété par une grille tranchante fixe située en aval dudit rotor de cisaillement et définissant ledit premier calibre.

Le rotor de cisaillement dudit broyeur et/ou déchiqueteur à métaux est de préférence agencé pour tourner à une faible vitesse de rotation de l'ordre de 20 tr/mn, pour déployer une forte puissance de l'ordre de 250kW et pour traiter des torons dont la dimension maximale est par exemple inférieure ou égale à 600mm.

Ladite installation peut avantageusement comporter au moins un poste de broyage et/ou de déchiquetage universel agencé pour déchiqueter lesdites matières ultimes, additionnées selon le cas desdits torons réduits en parcelles, en parcelles d'un deuxième calibre inférieur au premier calibre, dont la dimension maximale est par exemple comprise entre 60 et 100mm, et de préférence égale à 80mm.

Ledit poste de broyage et/ou de déchiquetage universel peut comporter avantageusement au moins un broyeur et/ou déchiqueteur universel pourvu d'un rotor de cisaillement et complété par une grille perforée fixe située en aval dudit rotor de cisaillement et définissant ledit deuxième calibre.

Ledit poste de tri métallique peut comporter un poste de tri métallique magnétique comportant au moins un séparateur par champ magnétique agencé pour séparer desdites matières ultimes réduites en parcelles, ladite fraction de matières métalliques magnétiques des autres fractions de matières métalliques amagnétiques, synthétiques et cellulosiques.

En complément ou en substitution, ledit poste de tri métallique peut comporter un poste de tri métallique amagnétique comportant au moins un séparateur par courant de Foucault agencé pour séparer desdites matières ultimes réduites en parcelles, ladite fraction de matières métalliques amagnétiques des autres fractions de matières métalliques magnétiques, synthétiques et cellulosiques.

L'installation comporte avantageusement au moins un convoyeur vibrant en aval dudit poste de broyage universel, et ledit poste de tri métallique magnétique et/ou ledit poste de tri métallique amagnétique sont préférentiellement situés sur le trajet dudit convoyeur vibrant.

Ladite installation peut en outre comporter, en aval dudit poste de tri métallique magnétique et/ou dudit poste de tri métallique amagnétique, un poste de nettoyage pourvu d'un tapis vibrant perforé agencé pour débarrasser la fraction de matières métalliques des autres fractions de matières synthétiques et cellulosiques restantes.

Dans un mode de réalisation préféré de l'invention, ledit poste de tri cellulosique comporte au moins une centrifugeuse alimentée par de l'eau et par lesdites matières ultimes réduites en parcelles, débarrassées de ladite fraction de matières métalliques, ladite centrifugeuse étant agencée pour séparer ladite fraction de matières synthétiques de ladite fraction de matières cellulosiques par différence de densité massique, de sorte que ladite fraction de matières synthétiques est récupérée par aspiration et ladite fraction de matières cellulosiques mélangée à l'eau est récupérée par gravité.

Dans ce cas, ladite centrifugeuse comporte avantageusement un tambour fixe pourvu dans sa partie inférieure d'un tamis calibré d'un troisième calibre inférieur au second calibre, un rotor tournant dans ledit tambour et pourvu de pales de battage et d'un racloir, lesdites pales de battage étant agencées pour séparer par battage ladite fraction de matières synthétiques de ladite fraction de matières cellulosiques, et ledit racloir étant agencé pour forcer le passage de ladite fraction de matières cellulosiques au travers dudit tamis pour être envoyée vers ledit poste d'épuration.

Ledit tamis peut définir un troisième calibre dont la dimension maximale est par exemple comprise entre 4 et 8mm et de préférence égale à 6mm, et ledit rotor peut être agencé pour tourner à grande vitesse entre 900 et 1000 tr/mn.

Ledit poste d'épuration peut comporter avantageusement au moins un bac de flottaison pour séparer les matières légères flottantes de ladite fraction de matières cellulosiques, et au moins un épurateur pour séparer les fibres cellulosiques de ladite fraction de matières cellulosiques avant de les renvoyer sous forme de pulpe dans ledit circuit de préparation de la pâte à papier.

Ladite installation peut comporter, en aval dudit poste de tri cellulosique, un compacteur agencé pour traiter ladite fraction de matières synthétiques pour qu'elle soit valorisée. Dans ce cas, elle peut comporter en amont dudit compacteur, un poste de tri synthétique agencé pour séparer par différence de densité massique la fraction lourde de la fraction légère desdites matières synthétiques.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 est une vue schématique de l'installation de traitement et de valorisation selon l'invention,
- la figure 2 est une vue schématique d'un broyeur à métaux faisant partie de l'installation selon l'invention,
- la figure 3 est une vue schématique d'un broyeur universel faisant partie de l'installation selon l'invention,
- la figure 4 est une vue schématique d'une centrifugeuse faisant partie de l'installation selon l'invention, et
- les figures 5 et 6 sont des vues schématiques de dessus et de côté de la centrifugeuse de la figure 4.

### Illustrations de l'invention et meilleure manière de la réaliser :

Dans l'exemple de réalisation illustré, les éléments ou parties identiques portent les mêmes numéros de référence.

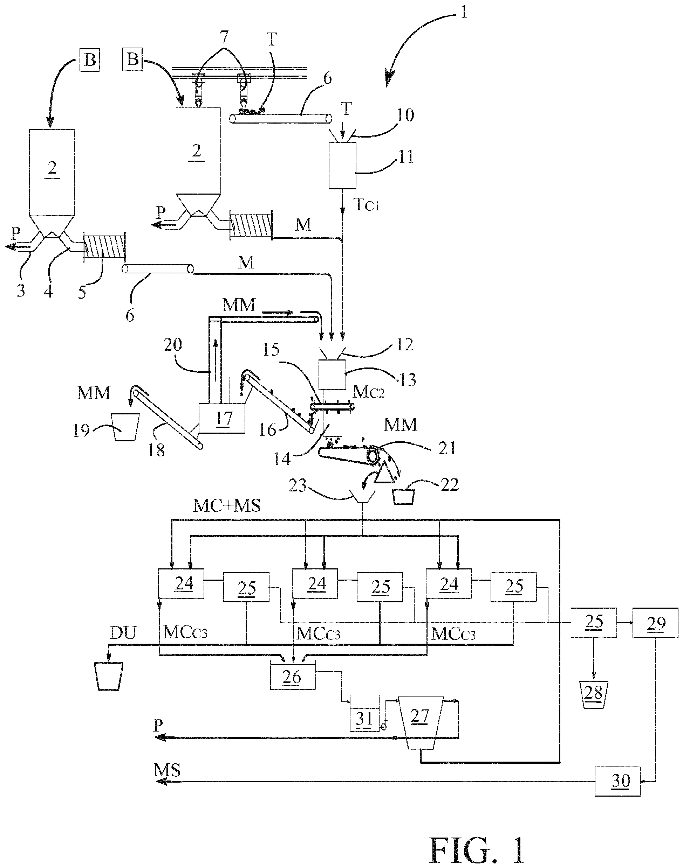

En référence à la figure 1, l'installation 1 de traitement des matières ultimes de papeteries selon l'invention peut constituer une ou plusieurs lignes de traitement de matières ultimes, intégrées ou non aux usines de papeteries. La figure 1 représente à gauche deux machines de désintégration ou pulpeurs 2 qui appartiennent aux papeteries, et d'où sont issues les matières ultimes M qui sont traitées par l'installation 1 de l'invention pour permettre leur séparation et leur valorisation.

De manière connue, les pulpeurs 2 de papeteries comportent une cuve alimentée en eau et pourvue d'un rotor en fond de cuve comportant des pales destinées à éclater et ouvrir la balle B de vieux papiers et cartons recyclés introduite par l' ouverture en partie supérieure de la cuve. La rotation du rotor va permettre de triturer et de démêler les fibres de cellulose ou fibres cellulosiques qui, additionnées d'eau, vont former une pâte à papier, aussi appelée pulpe P. Le terme « fibres de cellulose » couvre les fibres et particules cellulosiques destinées à former la pulpe P lorsqu'elles sont mélangées à l'eau. Cette pulpe P est extraite de la cuve par un conduit de sortie 3 pour être acheminée vers un circuit de préparation de la pâte à papier (non représenté). Les matières ultimes M qui restent en fond de cuve sont chargées d'humidité et extraites de la cuve par un conduit de vidange 4, transitent par un tambour ajouré 5, cylindre à claire-voie, ou similaire pour récupérer encore de la pulpe P afin de la réinjecter dans le circuit de préparation de pâte à papier, puis sont acheminées vers l'installation de traitement 1 par un tapis transporteur 6, une bande de convoyage ou similaire. Ces matières ultimes D sont chargées en humidité selon un taux au moins égal à 50% et de préférence compris entre 70 et 80%.

Selon la qualité ou la pureté des balles B de vieux papiers et cartons recyclés qui arrivent dans les papeteries, les matières ultimes M issues des pulpeurs 2 sont plus ou moins chargées en contaminants tels des matières plastiques, des films, des PVC, des polystyrènes, des colles, des encres, des métaux, de la ferraille, du bois, des fils de fer ou similaires. Dans la suite de la description, on utilise le terme générique « matières synthétiques MS » pour désigner toutes les matières non cellulosiques et non métalliques contenues dans les matières ultimes M et pouvant comporter d'une manière générale toutes les matières synthétiques et les matières plastiques sous forme de film ou non, et en particulier toutes les matières synthétiques organiques, telles que le polyamide, le polyester, la chlorofibre, les acryliques, les vinyliques, les élastomères, les aramides, les polypropylènes, les polyéthylènes, les polylactiques, les polyurées, les polyuréthanes, et toutes les matières synthétiques minérales, telles que les fibres de verre, les fibres de carbone, les fibres de bore, etc. ces listes n'étant bien entendu pas exhaustives. On utilise également le terme « matières métalliques MM » pour désigner toutes les matières non cellulosiques et non synthétiques contenues dans les matières ultimes M et pouvant comporter d'une façon générale le fer et ses alliages, l'aluminium et ses alliages, le cuivre et ses alliages, et en particulier tous éléments métalliques de classification de MENDELEIEV. On utilise enfin le terme « matières cellulosiques MS » pour désigner toutes les matières non synthétiques et non métalliques dans les matières ultimes M et pouvant comporter par exemple du bois, des fibres de cellulose, de la paille, du coton, etc. cette liste n'étant pas exhaustive. Ainsi les matières ultimes M peuvent contenir au moins une fraction de matières cellulosiques MC, une fraction de matières synthétiques MS et une fraction de matières métalliques MM. Il arrive que lors de la désintégration des balles B dans les pulpeurs, une partie des matières ultimes M sous forme de fibres, fils, films, câbles, etc. s'entremêle et forme un ou plusieurs torons T qui, compte tenu de leurs dimensions, ne peuvent pas être évacués par le conduit de vidange 4 et sont extraits de la cuve par son ouverture en partie supérieure au moyen d'un grappin 7. Les torons T sont acheminés vers l'installation de traitement 1 par un tapis transporteur 6, une bande de convoyage ou similaire.

Dans l'exemple représenté, qui se veut être le plus exhaustif possible puisque lesdites matières ultimes M comportent des torons T et des matières métalliques magnétiques et amagnétiques, ainsi qu'une large diversité de polluants, l'installation de traitement 1 comporte :
- une première trémie 10 agencée pour recevoir les torons T, et située en amont d'un poste de broyage et/ou de déchiquetage 11 pour métaux,
- un poste de broyage et/ou de déchiquetage 11 pour métaux agencé pour réduire les torons T en parcelles calibrées selon un calibre C1 appelé par la suite « premier calibre C1 »,
- une deuxième trémie 12 agencée pour recevoir d'une part les torons réduits en parcelles TC1 et d'autre part les matières ultimes M chargées en humidité issues des pulpeurs 2, cette deuxième trémie 12 étant située en aval du poste de broyage et/ou de déchiquetage 11 pour métaux et en amont d'un poste de broyage et/ou de déchiquetage 13 universel,
- un poste de broyage et/ou de déchiquetage 13 universel agencé pour mélanger et réduire les torons en parcelles TC1 et les matières ultimes M humides selon un calibre C2, appelé par la suite « second calibre C2 », même si le poste de broyage et/ou de déchiquetage 11 pour métaux n'est pas présent dans l'installation, le second calibre C2 étant bien évidemment inférieur au premier calibre C1,
- un convoyeur vibrant 14 situé en aval du poste de broyage et/ou de déchiquetage 13 universel et agencé pour répartir et étaler les matières ultimes mélangées réduites en parcelles MC2 sur toute la largeur dudit convoyeur en vue de faciliter les opérations de tri qui suivent,
- un poste de tri métallique 15 magnétique, disposé au-dessus et perpendiculairement au convoyeur vibrant 14, et agencé pour extraire par attraction magnétique les parcelles de matières métalliques MM magnétiques contenues dans les matières ultimes MC2,
- un premier tapis transporteur 16 situé en aval du poste de tri métallique 15 magnétique et en amont d'un poste de nettoyage 17 des métaux agencé pour acheminer les parcelles de matières métalliques MM magnétiques contenues dans les matières ultimes MC2,
- un poste de nettoyage 17 des métaux, agencé pour débarrasser lesdites parcelles de matières métalliques MM magnétiques contenant encore des matières cellulosiques MC et des matières synthétiques MS,
- un deuxième tapis transporteur 18 situé en aval du poste de nettoyage 17 et agencé pour acheminer les parcelles de matières métalliques MM magnétiques (ferreux) propres ou pures dans un bac de récupération 19 en vue de leur recyclage par exemple en sidérurgie ou similaire selon leur nature,
- un troisième tapis transporteur 20 situé en aval du poste de nettoyage 17 des métaux et en amont de la seconde trémie 12, et agencé pour remettre en circulation dans l'installation de traitement 1 les parcelles de matières métalliques MM magnétiques impropres contenant encore des matières cellulosiques MC et des matières synthétiques MS,
- un poste de tri métallique 21 amagnétique situé en aval du convoyeur vibrant 14, et agencé pour extraire par répulsion magnétique les parcelles de matières métalliques MM amagnétiques (non ferreux) contenues dans les matières ultimes MC2,
- un bac de récupération 22 situé en aval du second poste de tri métallique 21 amagnétique et agencé pour récupérer les parcelles de matières métalliques MM amagnétiques (non ferreux) en vue de leur recyclage par exemple en sidérurgie ou similaire selon leur nature,
- une troisième trémie 23 située en aval du poste de tri métallique 21 amagnétique et agencée pour récupérer les parcelles de matières de cellulosiques MC et de matières synthétiques MS contenues dans les matières ultimes MC2 débarrassés de toutes les parcelles de matières métalliques MM,
- un poste de tri cellulosique 24 situé en aval de la troisième trémie 23 et agencé pour séparer par densité les parcelles de matières de cellulosiques MC des parcelles de matières synthétiques MS contenues dans les matières ultimes MC2, en vue de leur recyclage dans le circuit de préparation de la pâte à papier des papeteries,
- un poste d'épuration 27 situé en aval du poste de tri cellulosique 24 et agencé pour séparer par densité les fibres de cellulose formant une pulpe P des parcelles restantes de matières cellulosiques MC,
- un poste de tri synthétique 25 situé en aval du poste de tri cellulosique 24 et agencé pour séparer par densité les parcelles de matières synthétiques MS contenues dans les matières ultimes MC2, en vue de leur recyclage en plasturgie ou similaire selon leur nature,
- un bac de récupération 26 des déchets ultimes DU situé en aval du poste de tri synthétique 25 correspondants aux matières ultimes M non valorisables.

L'invention n'est bien entendu pas limitée à cet exemple d'installation de traitement 1, qui se veut exhaustive, étant donné que selon la composition des matières ultimes M, la présence de l'un ou l'autre poste n'est peut-être pas indispensable. A titre d'exemple, la première trémie 10 et le poste de broyage 11 pour métaux peuvent ne pas être présents si les matières ultimes M sont exemptes de torons T. De même, un des postes de tri métallique 15, 21 peut ne pas être présent si les matières ultimes M sont exemptes de matières métalliques magnétiques ou amagnétiques.

Ensuite, la représentation schématique de l'installation de traitement 1 à la figure 1 n'illustre pas tous les moyens permettant le cheminement des matières ultimes M d'un poste à l'autre. Ce cheminement peut être réalisé pour tout moyen de transport adéquat tel que des tapis transporteurs, des goulottes, des conduits, et similaires. Ces moyens de transport sont adaptés en fonction des postes à charger et à décharger, de la configuration que l'on souhaite donner à l'installation de traitement 1 et de l'encombrement disponible. De même, la représentation schématique de l'installation de traitement 1 à la figure 1 n'illustre pas le circuit d'eau qui permet la récupération de l'eau issue des matières ultimes M au niveau des différents postes de traitement notamment au poste de tri cellulosique 24. Ce circuit de recyclage de l'eau issue des matières ultimes M et réinjectée dans ces matières ultimes M évite ainsi l'apport d'eau additionnelle. Ce circuit peut être en outre raccordé au circuit de recyclage de l'eau issue du processus industriel des papeteries et/ou au réseau d'eau pour pouvoir faire un appoint d'eau si le taux d'humidité des matières ultimes M devait être insuffisant.

Cette installation de traitement 1 a l'avantage de permettre la séparation entre les fibres de cellulose, les matières cellulosiques MC, les matières synthétiques MS et les matières métalliques MM, sans apport d'eau ou avec peu d'apport d'eau, et sans apport d'énergie superflue, afin de pouvoir valoriser dans un circuit de recyclage chacune de ces matières. Notamment les fibres de cellulose peuvent être recyclées immédiatement en les réinjectant directement dans le circuit de préparation de la pâte à papier de la papeterie lorsque l'installation de traitement 1 fait partie intégrante de la papeterie.

Bien entendu, l'installation de traitement 1 peut être séparée, voire distante de la papeterie. Dans ce cas, il faut prévoir des moyens de conditionnement et de transport adéquats des matières ultimes D d'une part et des différentes matières triées issues de ces matières ultimes D.

Les différents postes constituant l'installation de traitement 1 décrite en référence à la figure 1 vont à présent être décrits en référence à des exemples de réalisation préférés.

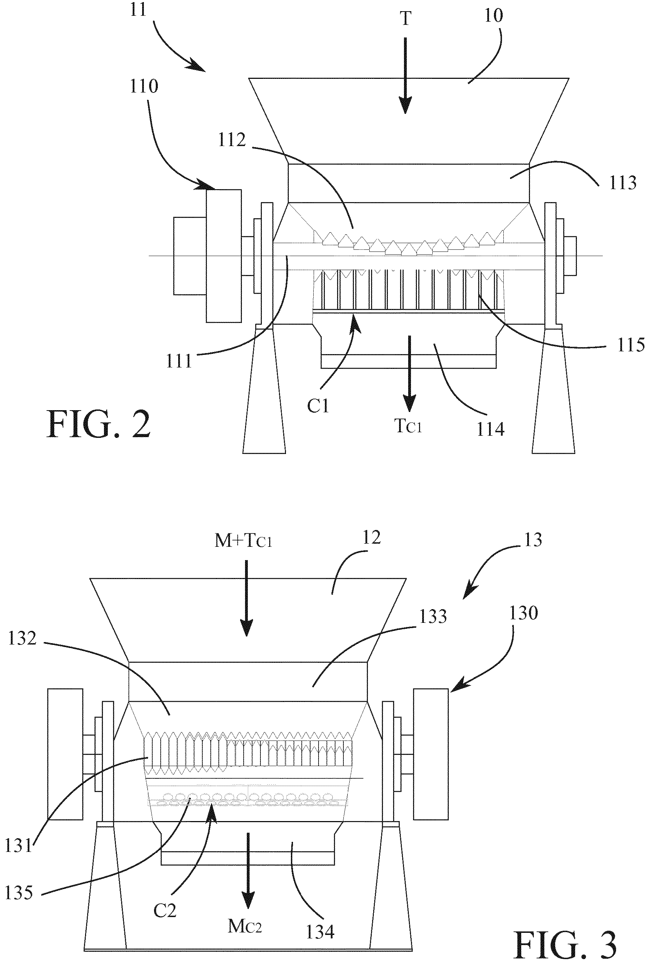

En référence à la figure 2, le poste de broyage et/ou de déchiquetage 11 pour métaux comporte au moins un broyeur et/ou déchiqueteur à métaux 110 d'un type connu et particulièrement adapté pour broyer, déchiqueter et cisailler des masses métalliques, telles que les torons T issus des matières ultimes M afin de les transformer en parcelles d'un calibre C1, appelé dans la suite « premier calibre ». Dans la suite de la description, le terme « broyeur » couvre aussi bien les broyeurs que les déchiqueteurs qui font sensiblement le même travail. Ce broyeur à métaux 110 comporte de manière connue un rotor de cisaillement 111 pourvu de lames tranchantes, coopérant avec des contre-lames tranchantes 112 prévues sur un châssis fixe. Son rotor de cisaillement 111 est prévu pour tourner à faible vitesse et par exemple à une vitesse de l'ordre de 20 tr/mn et pour développer une forte puissance de l'ordre de 250kW grâce à son entrainement par un moteur hydraulique, sans que ces valeurs ne soient limitatives. Il comporte une bouche d'entrée 113 prévue en amont du rotor de cisaillement 111 et sur laquelle est disposée la première trémie 10, ainsi qu'une bouche de sortie 114 prévue en aval dudit rotor pour créer un flux de matière qui se déplace sous l'effet de la gravité perpendiculairement à l'axe de rotation du rotor de cisaillement 111. Ce broyeur à métaux 110 est conçu pour admettre à l'entrée des torons T dont la plus grande dimension est au plus égale à 600mm. Il est spécialement complété par une grille tranchante 115 fixe, située en aval du rotor de cisaillement 111 et en amont de la bouche de sortie 114, et agencée pour définir le premier calibre C1 des parcelles obtenues après broyage. Ainsi, les torons T sont déchiquetés en parcelles dont la plus grande dimension est au plus égale à 250mm. Ces valeurs sont données à titre d'exemple et ne sont pas limitatives.

En référence à la figure 3, le poste de broyage et/ou de déchiquetage 13 universel comporte au moins un broyeur et/ou déchiqueteur universel 130 d'un type connu et particulièrement adapté pour broyer, déchiqueter et cisailler tout type de matières, telles que celles contenues dans les matières ultimes M chargées en humidité, additionnées ou non des torons réduits en parcelles TC1, afin de transformer ces matières ultimes mélangés en parcelles d'un calibre C2, qui est bien évidemment inférieur au premier calibre C1. Ce calibre C2 est appelé dans la suite de la description « second calibre » même s'il n'y a pas de premier calibre C1 lorsque l'installation de traitement ne comporte pas de poste de broyage et/ou de déchiquetage 11 pour métaux. Là encore et dans la suite de la description, le terme « broyeur » couvre aussi bien les broyeurs que les déchiqueteurs qui font sensiblement le même travail. Ce broyeur universel 130 comporte de manière connue un rotor de cisaillement 131 pourvu de lames tranchantes, coopérant avec des contre-lames tranchantes 132 prévues sur un châssis fixe. Son rotor de cisaillement 131 est prévu pour tourner à une vitesse supérieure à celle du broyeur à métaux 110, par exemple de l'ordre de 300 tr/mn, et pour développer une puissance un peu moins forte que celle du broyeur à métaux 110, de l'ordre de 220kW grâce à son entrainement par deux moteurs électriques combinés, sans que ces valeurs ne soient limitatives. Il comporte une bouche d'entrée 133 prévue en amont du rotor de cisaillement 131 et sur laquelle est disposée la deuxième trémie 12, ainsi qu'une bouche de sortie 134 prévue en aval dudit rotor pour créer un flux de matière qui se déplace sous l'effet de la gravité perpendiculairement à l'axe de rotation du rotor de cisaillement 131. Ce broyeur universel 130 est conçu pour admettre à l'entrée des matières dont la plus grande dimension est au plus égale à 250mm. Il est spécialement complété par une grille perforée 135 fixe, située en aval du rotor de cisaillement 131 et en amont de la bouche de sortie 134, et agencée pour définir le second calibre C2 des parcelles obtenues après broyage. Ainsi, les matières ultimes mélangés M et TC1 sont déchiquetés en parcelles dont la plus grande dimension est au plus égale à 80mm. Ces valeurs sont données à titre d'exemple et ne sont pas limitatives. Toutefois, le choix du second calibre C2 détermine la qualité des opérations de tri qui suivent. Il ne doit pas être trop gros (au-delà de 100-120mm) pour permettre la séparation par densité entre les matières cellulosiques MC et les matières synthétiques MS au poste de tri cellulosique 24. Il ne doit pas être trop petit (en-deçà de 40-50mm) pour éviter le colmatage des matières synthétiques MS aux matières cellulosiques MC au poste de tri cellulosique 24.

A la sortie du poste de broyage 13 universel, les matières ultimes mélangés réduits en parcelles MC2 sont déversées sur un convoyeur vibrant 14 d'un type connu, sur lequel les parcelles de matières mélangées vont sous l'effet des vibrations s'étaler et se répartir en couche mince sur toute la largeur du convoyeur pour permettre une séparation efficace de la fraction de matières métalliques MM des autres fractions de matières synthétiques MS et cellulosiques MC.

En fonction de la nature des matières métalliques MM connues dans les matières ultimes M, la séparation de la fraction de matières métalliques MM peut être réalisée au moyen de deux postes de tri 15, 21 pour dissocier parmi les matières métalliques MM, les matières métalliques magnétiques ou ferromagnétiques, et les matières métalliques non-magnétiques ou amagnétiques ou non-ferreuses. En référence à la figure 1, le poste de tri métallique 15 magnétique comporte au moins un séparateur magnétique, connu sous la dénomination « overband », qui permet le tri des matières métalliques magnétiques. Un système magnétique fixe, tel qu'un aimant permanent, est situé à l'intérieur d'un châssis autour duquel tourne une bande d'évacuation entraînée par un motoréducteur. Le séparateur magnétique est placé au-dessus du convoyeur vibrant 14 et de préférence perpendiculairement à son sens de défilement. Sous l'effet de l'attraction magnétique, les parcelles de matières ferromagnétiques véhiculées par le convoyeur vibrant 14 sont entraînées hors du convoyeur vibrant 14. Dès que l'attraction magnétique cesse, elles retombent alors, soit dans une trémie, soit sur le premier tapis transporteur 16.

Les parcelles de matières mélangées qui restent sur le convoyeur vibrant 14 et qui ont été débarrassées des parcelles de matières ferromagnétiques, sont ensuite déversées sur une bande transporteuse équipée du poste de tri métallique 21 amagnétique. Toujours en référence à la figure 1, le poste de tri métallique 21 amagnétique comporte au moins un séparateur à courants de Foucault qui permet le tri des matières métalliques amagnétiques. Un séparateur à courants de Foucault utilise un inducteur de champ magnétique variable disposé à proximité de la bande transporteuse pour séparer les parcelles de matières réagissant à un flux électromagnétique des autres. Plus précisément, les parcelles de matières métalliques amagnétiques, telles que l'aluminium, le magnésium, etc... sont éjectées et tombent dans un bac de récupération 22, et les parcelles de matières synthétiques sont inertes et tombent de la bande transporteuse sous l'effet de la gravité, soit dans un bac de récupération, soit dans une troisième trémie 23. Les parcelles de matières métalliques amagnétiques contenues dans le bac de récupération 22 vont pouvoir être valorisées et recyclées au travers de filières dédiées.

Les parcelles de matières métalliques magnétiques, triées au poste de tri métallique 15 magnétique, vont encore subir un nettoyage pour les débarrasser des éventuelles parcelles de matières synthétiques et cellulosiques restées collées afin de garantir leur pureté. Le poste de nettoyage 17 comporte au moins un crible nettoyeur pourvu d'une toile vibrante perforée à un calibre correspondant au second calibre C2. Sous l'effet des vibrations, les parcelles de matières métalliques rebondissent et s'entrechoquent provoquant le décollement des autres parcelles de matières non métalliques. Les parcelles de matières métalliques propres tombent à travers la toile vibrante perforée sur un deuxième tapis transporteur 18 puis dans un bac de récupération 19, et vont pouvoir être valorisées et recyclées directement en sidérurgie. Les autres parcelles de matières non métalliques ainsi que les parcelles de matières métalliques magnétiques impropres sont évacuées via le troisième tapis transporteur 20 et renvoyées dans la deuxième trémie 12 alimentant le second poste de broyage 13 pour subir une nouvelle fois l'opération de broyage. Bien entendu, ce poste de nettoyage 17 peut être également prévu en aval du poste de tri métallique 21 amagnétique.

Le poste de tri cellulosique 24 comporte au moins une centrifugeuse 240 alimentée par les matières ultimes réduites en parcelles MC2, totalement débarrassées de la fraction de matières métalliques MM. L'exemple représenté à la figure 1 montre plusieurs centrifugeuses 240 en parallèle, et notamment trois unités. Bien entendu cet exemple n'est pas limitatif, le nombre de centrifugeuses pouvant varier en fonction du volume de matières ultimes à traiter. Les matières ultimes MC2 ne comportent que la fraction de matières synthétiques MS et la fraction de matières cellulosiques MC. Elles sont acheminées de la troisième trémie 23 située en aval des postes de tri métallique 15, 21, à l'intérieur de la centrifugeuse 240 par une vis d'alimentation 241, qui peut être une vis d'Archimède ou similaire. La centrifugeuse 240 est également alimentée avec l'eau recyclée qui provient des matières ultimes M, et éventuellement du processus industriel des papeteries, et le cas échéant du réseau d'eau. Elle est conçue pour séparer la fraction de matières synthétiques MS de ladite fraction de matières cellulosiques MC par leur densité (poids volumétrique), de sorte que la fraction de matières synthétiques MS plus légère est récupérée par aspiration et la fraction de matières cellulosiques MC plus lourde et mélangée à l'eau est récupérée par gravité. Pour permettre une séparation optimale, le taux d'humidité des matières ultimes MC2 est important, et doit être au moins compris entre 60 et 80% et de préférence entre 68 et 70%. De même, pour permettre une séparation optimale, le calibre des parcelles de matières est important. Il ne doit pas être trop petit pour éviter que les parcelles de matières synthétiques MS et cellulosiques MC ne s'agglomèrent entre elles dans une pâte ou une boue, et il ne doit pas être trop grand pour pouvoir séparer les parcelles de matières synthétiques MS des matières cellulosiques MC, comme évoqué précédemment. Ce poste de tri cellulosique 24 constitue ainsi l'élément principal de l'installation de traitement 1 selon l'invention car il permet de récupérer jusqu' à 99,9% des matières cellulosiques MC contenues dans les matières ultimes M grâce au broyage et au tri des matières ultimes M effectués en amont.

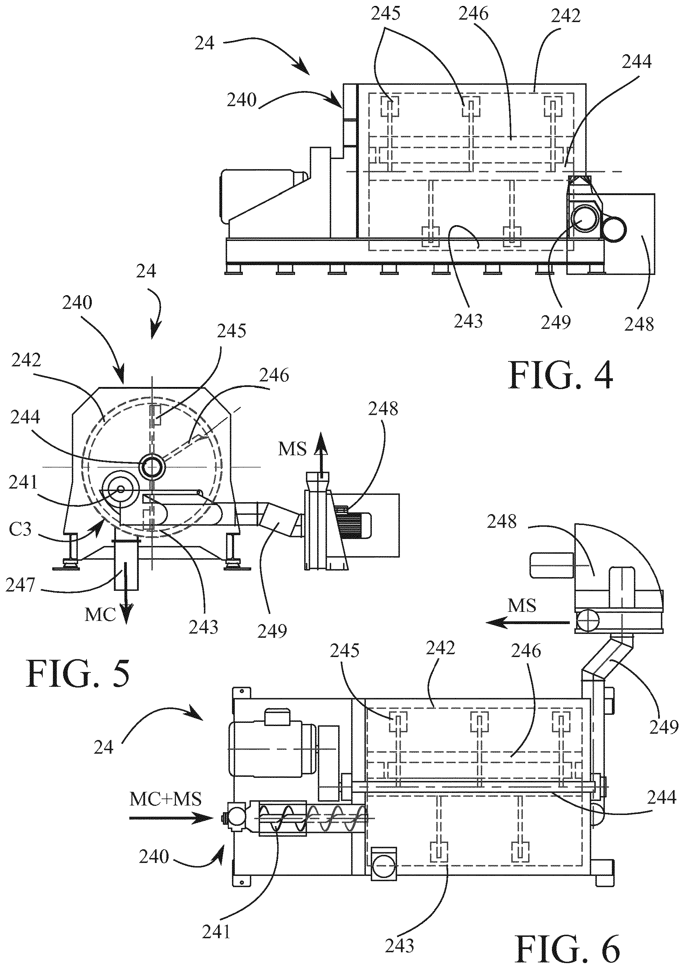

En référence plus particulièrement aux figures 4 à 6, la centrifugeuse 240 comporte un tambour 242 fixe dans lequel débouche la vis d'alimentation 241, et un tamis 243 en partie inférieure définissant un troisième calibre C3, bien évidemment inférieur au deuxième calibre C2. Ce troisième calibre C3 peut être compris entre 4 et 8mm et de préférence égal à 6mm, sans que ces valeurs ne soient limitatives. Elle comporte en outre un rotor 244 mobile en rotation à l'intérieur du tambour 242 et agencé pour tourner à grande vitesse par exemple entre 900 et 1000 tr/mn. Ce rotor 244 est équipé de pales de battage 245 et d'un racloir 246. Lorsque le rotor 244 tourne, les pales de battage 245 ont pour effet de brasser les matières ultimes MC2, de les frapper et de les séparer par leur densité en faisant tomber les matières les plus lourdes, à savoir les matières cellulosiques MC, dans le fond du tambour 242 en direction du tamis 243, et en maintenant en suspension les matières les plus légères, à savoir les matières synthétiques MS. Pendant ce temps, le racloir 246, qui en contact avec la paroi intérieure du tambour 242, a pour effet de forcer les matières cellulosiques MC à passer à travers du tamis 243 tout en assurant le décolmatage automatique du tamis 243.

Les matières cellulosiques réduites MCC3 et chargées d'eau forment une pâte qui est extraite de la centrifugeuse 240 par un conduit de sortie 247 en direction d'un poste d'épuration, qui peut comporter au moins un bac de flottaison 26 et un épurateur 27. Le bac de flottaison 26 a pour but de séparer les matières légères flottantes susceptibles d'être contenues et/ou agglomérées dans la pâte, comme des colles, du polystyrène, du bois, etc. des fibres de cellulose. Il comporte par exemple deux compartiments superposés, séparés par une grille calibrée. Les matières lourdes (fibres de cellulose et eau mélangées) tombent dans le fond en passant à travers la grille, et sont évacuées par une pompe en direction de l'épurateur 27. Les matières légères en suspension sont récupérées par une vis d'Archimède et évacuées, notamment en direction du bac de récupération 26 des déchets ultimes DU. Puis l'épurateur 27 permet d'épurer les fibres de cellulose afin d'enlever les derniers contaminants avant de renvoyer les fibres de cellulose additionnées d'eau sous forme de pulpe P dans le circuit de préparation de la pâte à papier des papeteries. Il comporte par exemple un tamis cylindrique calibré, dans lequel tourne un rotor pourvu de pales pour presser la pulpe P à travers le tamis. Le tamis peut avoir un calibre compris entre 0.10 et 0.20mm et de préférence 0.16mm sans que ces valeurs ne soient limitatives. Les matières résiduelles restant dans l'épurateur 27 sont évacuées, notamment en direction du bac de récupération 26 des déchets ultimes DU. Le poste d'épuration peut comporter en outre une cuve additionnelle 31, appelée « cuvier », qui reçoit la pâte du bac de flottaison 26 et de l'eau du processus industriel de papeterie afin d'adapter la concentration en eau de la pâte pour le fonctionnement de l'épurateur 27.

Les autres matières restantes, sous la terminologie matières synthétiques MS, sont extraites de la centrifugeuse 240 par une centrale d'aspiration 248 raccordée au tambour 242 par un conduit d'extraction 249 en direction d'un poste de tri synthétique 25. Ce poste de tri synthétique 25 comporte au moins un séparateur à air, d'un type connu, qui a pour but de séparer les matières synthétiques MS par leur poids. L'exemple représenté à la figure 1 montre plusieurs postes de tri synthétiques 25 permettant plusieurs niveaux de tri, dont trois postes en parallèle à la sortie des centrifugeuses 240 assurant un premier niveau de tri, et un poste en aval assurant un second niveau de tri. Bien entendu cet exemple n'est pas limitatif, le nombre de postes de tri synthétiques 25 et le nombre de niveaux de tri pouvant varier en fonction du volume à traiter. Les parcelles de matières synthétiques lourdes, telles que par exemple les polychlorures de vinyle (PVC), les polystyrènes haute densité (PSHD), etc..., tombent dans une goulotte et sont collectées dans un bac de récupération 28 pour un traitement ultérieur dans une filière dédiée qui ne fait partie de l'invention. Et les parcelles de matières synthétiques légères, telles que les polypropylènes, polyéthylènes, polystyrènes expansés, etc..., sont entraînées dans un flux d'air et envoyées dans un compacteur 29, d'un type connu, où elles passent entre deux disques qui, par friction, vont chauffer la matière synthétique pour la compacter et en conséquence réduire son volume. Une circulation d'air permet de maintenir la température à une valeur choisie en fonction de la matière synthétique à compacter. L'installation de traitement 1 comporte en outre un broyeur granulateur 30, d'un type connu, en aval du compacteur 29, pour transformer la matière synthétique compactée en granulés de granulométrie homogène, qui sont ensuite conditionnés dans des grands sacs souples, appelés big-bags, ou similaire, en vue d'être valorisées et recyclées en plasturgie, notamment en extrusion.

### Possibilités d'application industrielle :

L'installation de traitement 1 selon l'invention est bien entendu industrialisable et peut constituer une ou plusieurs lignes de traitement, intégrées ou non dans le processus industriel des papeteries. Elle peut également être étendue à d'autres industries non papetières qui cherchent à réduire leurs coûts d'évacuation des matières ultimes produites. A titre d'exemple, il est possible de citer les industries de l'agroalimentaire confrontées au recyclage des contenants alimentaires complexes, qui peuvent comporter à la fois des fibres de cellulose, des films en polyéthylène et des films barrière en aluminium.

Il apparait clairement de cette description que l'installation de traitement 1 et son procédé de traitement associé répondent aux objectifs fixés, à savoir une solution industrielle écologique et économique, permettant de recycler et de valoriser la quasi-totalité des matières ultimes de papeteries, faisant ainsi entrer les industries notamment papetières dans le cercle vertueux de l'économie circulaire.

La présente invention n'est pas limitée à l'exemple de réalisation décrit mais s'étend à toute modification et variante évidentes pour un homme du métier en restant dans l'étendue revendiquée. Notamment, les équipements permettant de réaliser l'installation de traitement 1 selon l'invention sont décrits à titre d'exemples non limitatifs.

## Revendications

1. Procédé de traitement des matières ultimes issus de papeteries, ces matières ultimes (M) étant récupérées à la sortie de machines de désintégration, appelées pulpeurs (2), agencées pour déchiqueter, désintégrer, triturer des vieux papier et cartons recyclés pour en extraire une pulpe (P) composée de fibres de cellulose et d'eau qui va alimenter un circuit de préparation de la pâte à papier, ces matières ultimes (M) comportant encore des fibres de cellulose contaminées par des matières diverses contenant au moins une fraction de matières métalliques (MM), une fraction de matières synthétiques (MS) et une fraction de matières cellulosiques (MC), procédé dans lequel l'on récupère lesdites matières ultimes (M) chargées en humidité à plus de 50% en masse, dans lequel l'on effectue les opérations de traitement dudit procédé sur lesdites matières ultimes (M) chargées en humidité, et dans lequel, parmi lesdites opérations de traitement, l'on procède chronologiquement au moins aux opérations suivantes :
1) broyage et/ou déchiquetage desdites matières ultimes (M) chargées en humidité en parcelles calibrées,
2) séparation mécanique de ladite fraction de matières métalliques (MM) desdites matières ultimes (M), afin de pouvoir la valoriser au moins en partie en sidérurgie,
3) séparation mécanique de ladite fraction de matières synthétiques (MS) de ladite fraction de matières cellulosiques (MC), afin de pouvoir la valoriser au moins en plasturgie, et
4) séparation mécanique des fibres de cellulose de ladite fraction de matières cellulosiques (MC), afin de pouvoir les valoriser en les réinjectant dans ledit circuit de préparation de la pâte à papier des papeteries.

2. Procédé selon la revendication 1, **caractérisé en ce que** l'on récupère lesdites matières ultimes (M) chargées en humidité à hauteur de 70 à 80% en masse.

3. Procédé selon la revendication 1, dans lequel lesdites matières ultimes comportent en outre des torons (T) formés à partir de matières métalliques filaires et extraits desdits pulpeurs (2), **caractérisé en ce que**, parmi lesdites opérations de traitement, l'on procède à une opération de broyage et/ou déchiquetage desdits torons (T) en parcelles d'un calibre (C1) correspondant à une dimension maximale comprise entre 150 et 300mm, et de préférence égale à 250mm, et **en ce que** l'on ajoute lesdits torons réduits en parcelles (TC1) dans lesdites matières ultimes (M) chargées en humidité.

4. Procédé selon l'une quelconque des revendications précédentes, **caractérisé en ce que** l'on procède à une opération de broyage et/ou déchiquetage desdites matières ultimes (M, TC1) en parcelles d'un calibre (C2), correspondant à une dimension maximale comprise entre 60 et 100mm, et de préférence égale à 80mm.

5. Procédé selon la revendication 4, **caractérisé en ce que** l'on procède à une première opération de séparation desdites matières ultimes réduites en parcelles (MC2), dans laquelle on sépare mécaniquement ladite fraction de matières métalliques (MM) des autres fractions de matières synthétiques (MS) et cellulosiques (MC).

6. Procédé selon la revendication 5, **caractérisé en ce que**, pour effectuer ladite première opération de séparation, l'on utilise la différence de magnétisme desdits matériaux, et l'on procède en deux étapes dans lesquelles on sépare d'une part les parcelles de matières métalliques (MM) magnétiques, et d'autre part les parcelles de matières métalliques (MM) amagnétiques.

7. Procédé selon l'une quelconque des revendications 5 ou 6, **caractérisé en ce qu'**après ladite première opération de séparation, l'on effectue une étape de nettoyage par vibration mécanique pour débarrasser lesdites parcelles de matières métalliques (MM) magnétiques et/ou amagnétiques des autres matières cellulosiques (MC) et synthétiques (MS) restantes, et l'on récupère ladite fraction de matières métalliques (MM) nettoyée pour la valoriser dans des filières dédiées.

8. Procédé selon la revendication 4, **caractérisé en ce que** l'on procède à une seconde opération de séparation desdites matières ultimes réduites en parcelles (MC2) débarrassées de ladite fraction de matières métalliques (MM), dans laquelle on sépare ladite fraction de matières cellulosiques (MC) de l'autre fraction de matières synthétiques (MS).

9. Procédé selon la revendication 8, **caractérisé en ce que**, pour effectuer la seconde opération de séparation, l'on utilise la différence de densité massique desdits matériaux, et l'on récupère d'une part la fraction de matières cellulosiques (MC) qui tombe par gravité, et d'autre part la fraction de matières synthétiques (MS) qui reste en suspension par aspiration.

10. Procédé selon la revendication 9, **caractérisé en ce que**, pour effectuer ladite seconde opération de séparation, l'on procède par centrifugation en présence d'eau et par battage simultané, ladite fraction de matières cellulosiques (MC) chargée en eau tombant à travers un tamis d'un calibre (C3) correspondant à une dimension maximale comprise entre 4 et 8mm et de préférence égale à 6mm, et **en ce que** l'on achemine la fraction de matières cellulosiques réduite (MCC3) vers ledit circuit de préparation de la pâte à papier des papeteries.

11. Procédé selon la revendication 10, **caractérisé en ce que** l'on fait passer la fraction de matières cellulosiques réduite (MCC3) à travers un épurateur (27) pour séparer mécaniquement les fibres de cellulose formant une pulpe (P) de ladite fraction de matières cellulosiques réduite (MCC3) pour les valoriser en les réinjectant dans ledit circuit de préparation de la pâte à papier des papeteries.

12. Procédé selon la revendication 9, **caractérisé en ce que** l'on achemine la fraction de matières synthétiques (MS) récupérée par aspiration vers un compacteur (29) et un broyeur granulateur (30) pour les valoriser.

13. Procédé selon la revendication 12, **caractérisé en ce que**, préalablement à l'acheminement de la fraction de matières synthétiques (MS) vers un compacteur (29) et un broyeur granulateur (30) pour les valoriser, l'on sépare la fraction lourde de la fraction légère desdites matières synthétiques (MS).

14. Installation de traitement (1) des matières ultimes issues de papeteries, ces matières ultimes (M) étant récupérées à la sortie de machines de désintégration, appelées pulpeurs (2), agencées pour déchiqueter, désintégrer, triturer des vieux papier et cartons recyclés pour en extraire une pulpe (P) composée de fibres de cellulose et d'eau qui va alimenter un circuit de préparation de la pâte à papier, ces matières ultimes (M) comportant encore des fibres de cellulose contaminées par des matières diverses contenant au moins une fraction de matières métalliques (MM), une fraction de matières synthétiques (MS) et une fraction de matières cellulosiques (MC), ladite installation de traitement étant agencée pour mettre en œuvre le procédé de traitement selon l'une quelconque des revendications précédentes et pour travailler sur des matières ultimes (M) chargées en humidité à plus de 50% en masse et de préférence entre 70 et 80% en masse, et ladite installation comportant au moins :
1) un poste de broyage et/ou de déchiquetage (11, 13) agencé pour broyer et/ou déchiqueter lesdites matières ultimes (M) chargées en humidité en parcelles calibrées,
2) un poste de tri métallique (15, 21) agencé pour séparer mécaniquement ladite fraction de matières métalliques (MM) desdites matières ultimes (M), afin de pouvoir la valoriser au moins en partie en sidérurgie,
3) un poste de tri cellulosique (24) agencé pour séparer mécaniquement ladite fraction de matières synthétiques (MS) afin de pouvoir la valoriser au moins en plasturgie, de ladite fraction de matières cellulosiques (MC), et
4) un poste d'épuration (27) agencé pour séparer mécaniquement les fibres de cellulose de ladite fraction de matières cellulosiques (MC) afin de pouvoir les valoriser en les réinjectant dans ledit circuit de préparation de la pâte à papier des papeteries.

15. Installation selon la revendication 14, lesdites matières ultimes comportant en outre des torons (T) formés à partir de matières métalliques filaires et extraits desdits pulpeurs (2), **caractérisée en ce que** ladite installation comporte au moins un poste de broyage et/ou de déchiquetage (11) pour métaux agencé pour broyer et/ou déchiqueter lesdits torons (T) en parcelles d'un calibre (C1), dont la dimension maximale est comprise entre 150 et 300mm, et de préférence égale à 250mm, et des moyens pour ajouter lesdits torons réduits en parcelles (TC1) dans les matières ultimes (M) chargées en humidité.

16. Installation selon la revendication 15, **caractérisée en ce que** ledit poste de broyage et/ou de déchiquetage (11) pour métaux comporte au moins un broyeur et/ou un déchiqueteur à métaux (110) pourvu d'un rotor de cisaillement (111) complété par une grille tranchante (115) fixe située en aval dudit rotor de cisaillement et définissant ledit calibre (C1).

17. Installation selon la revendication 16, **caractérisée en ce que** le rotor de cisaillement (111) dudit broyeur et/ou déchiqueteur à métaux (110) est agencé pour tourner à une faible vitesse de rotation de l'ordre de 20 tr/mn, déployer une forte puissance de l'ordre de 250kW ; et traiter des torons (T) dont la dimension maximale est inférieure ou égale à 600mm.

18. Installation selon l'une quelconque des revendications 14 à 17, **caractérisée en ce qu'**elle comporte au moins un poste de broyage et/ou de déchiquetage (13) universel agencé pour déchiqueter lesdites matières ultimes (M, TC1) en parcelles d'un calibre (C2), dont la dimension maximale est comprise entre 60 et 100mm, et de préférence égale à 80mm.

19. Installation selon la revendication 18, **caractérisée en ce que** ledit poste de broyage et/ou de déchiquetage (13) universel comporte au moins un broyeur et/ou déchiqueteur universel (130) pourvu d'un rotor de cisaillement (131) et complété par une grille perforée (135) fixe située en aval dudit rotor de cisaillement (131) et définissant ledit calibre (C2).

20. Installation selon la revendication 18, **caractérisée en ce que** ledit poste de tri métallique comporte un poste de tri métallique (15) magnétique comportant au moins un séparateur par champ magnétique agencé pour séparer ladite fraction de matières métalliques (MM) magnétiques des autres fractions de matières métalliques (MM) amagnétiques, synthétiques (MS) et cellulosiques (MC) contenues dans lesdites matières ultimes réduites en parcelles (MC2).

21. Installation selon la revendication 18, **caractérisée en ce que** ledit poste de tri métallique comporte un poste de tri métallique (21) amagnétique comportant au moins un séparateur par courant de Foucault agencé pour séparer ladite fraction de matières métalliques (MM) amagnétiques des autres fractions de matières métalliques (MM) magnétiques, synthétiques (MS) et cellulosiques (MC) contenues dans lesdites matières ultimes réduites en parcelles (MC2).

22. Installation selon l'une quelconque des revendications 20 et 21, **caractérisée en ce qu'**elle comporte au moins un convoyeur vibrant (14) en aval dudit poste de broyage (13) universel, et **en ce que** ledit poste de tri métallique (15) magnétique et/ou ledit poste de tri métallique (21) amagnétique sont situés sur le trajet dudit convoyeur vibrant (14).

23. Installation selon la revendication 22, **caractérisée en ce qu'**elle comporte, en aval dudit poste de tri métallique (15) magnétique et/ou dudit poste de tri métallique (21) amagnétique, un poste de nettoyage (17) pourvu d'un tapis vibrant perforé agencé pour débarrasser la fraction de matières métalliques (MM) des autres fractions de matières synthétiques (MS) et cellulosiques (MC) restantes.

24. Installation selon la revendication 18, **caractérisée en ce que** ledit poste de tri cellulosique (24) comporte au moins une centrifugeuse (240) alimentée par de l'eau et par lesdites matières ultimes réduites en parcelles (MC2) débarrassées de ladite fraction de matières métalliques (MM), ladite centrifugeuse étant agencée pour séparer ladite fraction de matières synthétiques (MS) de ladite fraction de matières cellulosiques (MC) par différence de densité massique, de sorte que ladite fraction de matières synthétiques (MS) est récupérée par aspiration et ladite fraction de matières cellulosiques (MC) mélangée à l'eau est récupérée par gravité.

25. Installation selon la revendication 24, **caractérisée en ce que** ladite centrifugeuse (240) comporte un tambour (242) fixe pourvu dans sa partie inférieure d'un tamis (243) calibré , un rotor (244) tournant dans ledit tambour (242) et pourvu de pales de battage (245) et d'un racloir (246), lesdites pales de battage (245) étant agencées pour séparer par battage ladite fraction de matières synthétiques (MS) de ladite fraction de matières cellulosiques (MC), et ledit racloir (246) étant agencé pour forcer le passage de ladite fraction de matières cellulosiques (MC) au travers dudit tamis (243) pour être envoyées vers le poste d'épuration (27).

26. Installation selon la revendication 25, **caractérisée en ce que** ledit tamis (243) définit un calibre (C3) dont la dimension maximale est comprise entre 4 et 8mm et de préférence égale à 6mm.

27. Installation selon la revendication 25, **caractérisée en ce que** ledit rotor (244) est agencé pour tourner à grande vitesse entre 900 et 1000 tr/mn.

28. Installation selon la revendication 14, **caractérisée en ce que** ledit poste d'épuration comporte au moins un bac de flottaison (26) pour séparer les matières légères flottantes de ladite fraction de matières cellulosiques (MC), et au moins un épurateur (27) pour séparer mécaniquement les fibres cellulosiques de ladite fraction de matières cellulosiques (MC) avant de les renvoyer sous forme de pulpe (P) dans ledit circuit de préparation de la pâte à papier.

29. Installation selon la revendication 24, **caractérisée en ce qu'**elle comporte, en aval dudit poste de tri cellulosique (24), un compacteur (29) agencé pour traiter ladite fraction de matières synthétiques (MS) pour qu'elle soit valorisée.

30. Installation selon la revendication 28, **caractérisée en ce qu'**elle comporte en amont dudit compacteur (29), un poste de tri synthétique (25) agencé pour séparer par différence de densité massique la fraction lourde de la fraction légère desdites matières synthétiques (MS).

## Patentansprüche

1. Verfahren zur Aufbereitung von Endstoffen aus Papierfabriken, wobei diese Endstoffe (M) am Ausgang von Zerkleinerungsmaschinen, den sogenannten Pulpern (2), gesammelt werden, die angeordnet sind, um Altpapier und Recyclingkarton zu schreddern, zu zerkleinern und zu zermalmen, um daraus eine Pulpe (P) zu extrahieren, die aus Zellulosefasern und Wasser besteht und in einen Kreislauf zur Aufbereitung von Papierbrei eingespeist wird, wobei diese Endstoffe (M) noch Zellulosefasern umfassen und mit verschiedenen Materialien verunreinigt sind, die mindestens einen Anteil metallischer Stoffe (MM), einen Anteil an synthetischen Stoffen (MS) und einen Anteil zellulosehaltiger Stoffe (MC) enthalten, ein Verfahren, bei welchem man die Endstoffe (M) gewinnt, die mit Feuchtigkeit vom mehr als 50 Gew.-% beladen sind, die mit Feuchtigkeit beladenen Endstoffe (M) nach diesem Verfahren aufbereitet und chronologisch mindestens folgende Vorgänge durchführt:
1) Zerkleinern und/oder Schreddern der mit Feuchtigkeit beladenen Endstoffe (M) in kalibrierte Stücke,
2) mechanische Trennung des Anteils an metallischen Stoffen (MM) von den Endstoffen (M), damit dieser zumindest teilweise in der Eisen- und Stahlindustrie verwertet werden kann,
3) mechanische Trennung des Anteils an synthetischen Stoffen (MS) vom Anteil an zellulosehaltigen Stoffen (MC), damit dieser zumindest in der Kunststoffverarbeitung verwertet werden kann, und
4) mechanische Trennung der Zellulosefasern vom Anteil an zellulosehaltigen Stoffen (MC), damit diese in den Aufbereitungskreislauf von Papierbrei der Papierfabriken zurückgeführt und verwertet werden können.

2. Verfahren nach Anspruch 1, **dadurch gekennzeichnet, dass** man die mit Feuchtigkeit in Höhe von 70 bis 80 Gew.-% beladenen Endstoffe (M) zurückgewinnt.

3. Verfahren nach Anspruch 1, wobei die Endstoffe außerdem Litzen (T) umfassen, die aus drahtförmigen metallischen Materialien bestehen und aus den Pulpern (2) extrahiert werden, **dadurch gekennzeichnet, dass** man bei der Aufbereitung einen Zerkleinerungs- und/oder Schreddervorgang der Litzen (T) in Partikel eines Kalibers (C1) mit einer maximalen Größe zwischen 150 und 300 mm und vorzugsweise gleich 250 mm durchführt, und dass man die zerkleinerten Litzen (TC1) in die mit Feuchtigkeit beladenen Endstoffe (M) einbringt.

4. Verfahren nach einem der vorhergehenden Ansprüche, **dadurch gekennzeichnet, dass** man einen Zerkleinerungs- und/oder Schreddervorgang der genannten Endstoffe (M, TC1) in Partikel eines Kalibers (C2) mit einer maximalen Größe zwischen 60 und 100 mm durchführt, wobei die Bezugsgröße 80 mm beträgt.

5. Verfahren nach Anspruch 4, **dadurch gekennzeichnet, dass** man einen ersten Trennungsvorgang der zerkleinerten Endstoffe (MC2) durchführt, bei dem man den Anteil an metallischen Stoffen (MM) mechanisch von den anderen Anteilen aus synthetischen (MS) und zellulosehaltigen (MC) Stoffen trennt.

6. Verfahren nach Anspruch 5, **dadurch gekennzeichnet, dass** man beim ersten Trennvorgang den unterschiedlichen Magnetismus der Materialien nutzt und in zwei Schritten vorgeht, in denen man einerseits die Stücke aus magnetischen metallischen Stoffen (MM) und andererseits die Stücke aus nichtmagnetischen metallischen Stoffen (MM) abtrennt.

7. Verfahren nach einem der Ansprüche 5 oder 6, **dadurch gekennzeichnet, dass** nach dem ersten Trennvorgang ein Reinigungsschritt durch mechanische Vibration durchgeführt wird, um die magnetischen und/oder nichtmagnetischen metallischen Stoffe (MM) von anderen übrigen zellulosehaltigen (MC) und synthetischen (MS) Stoffen zu befreien, und bei dem man den gereinigten metallischen Anteil (MM) zur Verwertung in dedizierten Branchen gewinnt.

8. Verfahren nach Anspruch 4, **dadurch gekennzeichnet, dass** ein zweiter Schritt durchgeführt wird, um die zerkleinerten Endstoffe (MC2) zu trennen, die von Metallanteilen (MM) befreit wurden, bei dem der Anteil an zellulosehaltigen Stoffen (MC) von dem anderen Anteil an synthetischen Stoffen (MS) getrennt wird.

9. Verfahren nach Anspruch 8, **dadurch gekennzeichnet, dass** man beim zweiten Trennvorgang die unterschiedliche Massendichte der genannten Materialien nutzt und einerseits den Anteil an zellulosehaltigen Stoffen (MC), der sich durch Schwerkraft nach unten absetzt, und andererseits den Anteil an synthetischen Stoffen (MS), der in der Schwebe bleibt, durch Absaugen gewinnt.

10. Verfahren nach Anspruch 9, **dadurch gekennzeichnet, dass** die Zentrifugierung mit Wasser und das Schlagen beim zweiten Trennvorgang gleichzeitig durchgeführt werden, wobei der mit Wasser beladene Anteil der zellulosehaltigen Stoffe (MC) durch ein Sieb eines Kalibers (C3) mit einer maximalen Größe zwischen 4 und 8 mm und vorzugsweise gleich 6 mm fällt, und dass der zerkleinerte Anteil an zellulosehaltigen Stoffen (MCC3) zum Kreislauf zur Aufbereitung des Papierbreis der Papierfabriken geleitet wird.

11. Verfahren nach Anspruch 10, **dadurch gekennzeichnet, dass** man den Anteil an zerkleinerten zellulosehaltigen Stoffen (MCC3) durch einen Reiniger (27) leitet, um die Zellulosefasern, die eine Pulpe (P) bilden, mechanisch von dem Anteil an zerkleinerten zellulosehaltigen Stoffen (MCC3) zu trennen, um sie zu verwerten, indem man sie wieder in den Kreislauf der Aufbereitung von Papierbrei der Papierfabriken zurückführt.

12. Verfahren nach Anspruch 9, **dadurch gekennzeichnet, dass** man den durch Absaugen gewonnenen Anteil an synthetischen Stoffen (MS) zu einem Verdichter (29) und einer Granuliermühle (30) führt, um ihn zu verwerten.

13. Verfahren nach Anspruch 12, **dadurch gekennzeichnet, dass** man vor der Zuführung des Anteils an synthetischen Stoffen (MS) zu einem Verdichter (29) und zu einer Granuliermühle (30) zur Verwertung den schweren Anteil von dem leichten Anteil an synthetischen Stoffen (MS) trennt.

14. Anlage zur Aufbereitung (1) von Endstoffen aus Papierfabriken, wobei diese Endstoffe (M) am Ausgang von Zerkleinerungsmaschinen, den sogenannten Pulpern (2), gewonnen werden, die so angeordet sind, dass sie Altpapier und Recyclingkarton schreddern, zerkleinern und zermalmen, um daraus eine Pulpe (P) aus Zellulosefasern und Wasser zu gewinnen, die in einen Kreislauf zur Aufbereitung von Papierbrei eingespeist wird, wobei diese Endstoffe (M) noch Zellulosefasern enthalten, die durch verschiedene Stoffe verunreinigt sind, die mindestens einen Anteil an metallischen Stoffen (MM), einen Anteil an synthetischen Stoffen (MS) und einen Anteil an zellulosehaltigen Stoffen (MC) enthalten, die Aufbereitungsanlage so eingerichtet ist, dass sie das Aufbereitungsverfahren nach einem der vorhergehenden Ansprüche durchführt und mit Endstoffen (M) arbeitet, die zu mehr als 50 Gew.-% und vorzugsweise zwischen 70 und 80 Gew.-% mit Feuchtigkeit beladen sind, und die Anlage mindestens Folgendes umfasst:
1) eine Zerkleinerungs- und/oder Schredderstation (11, 13), die so beschaffen ist, dass sie die mit Feuchtigkeit beladenen Endstoffe (M) in kalibrierte Stücke zerkleinert und/oder schreddert,
2) eine Metallsortierstation (15, 21), die so beschaffen ist, dass sie den Anteil der metallischen Stoffe (MM) mechanisch von den Endstoffen (M) trennt, um sie zumindest teilweise in der Eisen- und Stahlindustrie verwerten zu können,
3) eine Zellulosesortierstation (24), die so beschaffen ist, dass sie den Anteil an synthetischen Stoffen (MS) mechanisch vom Anteil an zellulosehaltigen Stoffen (MC) trennt, um ihn zumindest in der Kunststoffindustrie zu verwerten, und
4) eine Reinigungsstation (27), die so beschaffen ist, dass sie die Zellulosefasern mechanisch vom Anteil an zellulosehaltigen Stoffen (MC) trennt, damit sie in den Kreislauf der Papierfabriken zur Aufbereitung von Papierbrei zurückgeführt und verwertet werden können.

15. Anlage nach Anspruch 14, wobei die Endstoffe außerdem Litzen (T) umfassen, die aus drahtförmigen metallischen Materialien gebildet und aus den Pulpern (2) entnommen werden, **dadurch gekennzeichnet, dass** die Anlage mindestens eine Zerkleinerungs- und/oder Schredderstation (11) für Metalle umfasst, die zum Zerkleinern und/oder Schreddern der Litzen (T) in Partikel eines Kalibers (C1) mit einer maximalen Größe zwischen 150 und 300 mm und vorzugsweise gleich 250 mm eingerichtet ist, und Mittel, um die in Stücke zerkleinerten Litzen (TC1) zu den Endstoffen (M), die Feuchtigkeit enthalten, zu geben.

16. Anlage nach Anspruch 15, **dadurch gekennzeichnet, dass** die Zerkleinerungs- und/oder Schredderstation (11) für Metalle mindestens einen Zerkleinerer und/oder Schredder für Metalle (110) umfasst, der mit einem Schneidrotor (111) versehen ist, der durch ein feststehendes Schneidgitter (115) ergänzt wird, das sich stromabwärts des Schneidrotors befindet und mit dem das Kaliber (C1) festgelegt wird.

17. Anlage nach Anspruch 16, **dadurch gekennzeichnet, dass** der Schneidrotor (111) des Metallzerkleinerers und/oder des Metallschredders (110) so beschaffen ist, dass er mit einer niedrigen Drehzahl in der Größenordnung von 20 U/min rotiert, eine hohe Leistung in der Größenordnung von 250 kW bringt und Litzen (T) mit einer maximalen Abmessung unter oder gleich 600 mm bearbeitet.

18. Anlage nach einem der Ansprüche 14 bis 17, **dadurch gekennzeichnet, dass** sie mindestens eine universelle Zerkleinerungs- und/oder Schredderstation (13) umfasst, die so beschaffen ist, dass sie die Endstoffe (M, TC1) in Stücke eines Kalibers (C2) schreddert, die eine maximale Größe zwischen 60 und 100 mm und vorzugsweise 80 mm aufweisen.

19. Anlage nach Anspruch 18, **dadurch gekennzeichnet, dass** die Universal-Zerkleinerungs- und/oder Schredderstation (13) mindestens einen Universal-Zerkleinerer und/oder Schredder (130) umfasst, der mit einem Schneidrotor (131) versehen ist und durch ein feststehendes perforiertes Gitter (135) ergänzt wird, das sich stromabwärts des Schneidrotors (131) befindet und mit dem das Kaliber (C2) festgelegt wird.

20. Anlage nach Anspruch 18, **dadurch gekennzeichnet, dass** die Metallsortierstation eine Station für magnetische Metalle (15) mit mindestens einem Magnetfeldabscheider umfasst, der so beschaffen ist, dass er den Anteil an magnetischen Metallstoffen (MM) von anderen Anteilen an nichtmagnetischen metallischen (MM), synthetischen (MS) und zellulosehaltigen (MC) Stoffen trennt, die in den zerkleinerten Endstoffen (MC2) enthalten sind.

21. Anlage nach Anspruch 18, **dadurch gekennzeichnet, dass** die Metallsortierstation eine Station für nichtmagnetische Metalle (21) mit mindestens einem Wirbelstromabscheider umfasst, der so beschaffen ist, dass er den Anteil an nichtmagnetischen Metallstoffen (MM) von den anderen Anteilen an magnetischen metallischen (MM), synthetischen (MS) und zellulosehaltigen (MC) Stoffen trennt, die in den zerkleinerten Endstoffen (MC2) enthalten sind.

22. Anlage nach einem der Ansprüche 20 bis 21, **dadurch gekennzeichnet, dass** sie mindestens einen Vibrationsförderer (14) stromabwärts der Universalzerkleinerungsstation (13) aufweist, und dass sich die Sortierstation für magnetische Metalle (15) und/oder die Sortierstation für nichtmagnetische Metalle (21) auf dem Transportweg des Vibrationsförderers (14) befinden.

23. Anlage nach Anspruch 22, **dadurch gekennzeichnet, dass** sie stromabwärts der Sortierstation für magnetische Metalle (15) und/oder der Sortierstation für nichtmagnetische Metalle (21) eine Reinigungsstation (17) umfasst, die mit einem vibrierenden Siebband ausgestattet ist, das so beschaffen ist, dass es den Anteil an metallischen Stoffen (MM) von den übrigen Anteilen an synthetischen (MS) und zellulosehaltigen (MC) Stoffen befreit.

24. Anlage nach Anspruch 18, **dadurch gekennzeichnet, dass** die Zellulosesortierstation (24) mindestens eine Zentrifuge (240) umfasst, der Wasser und die in Stücke zerkleinerten Endstoffe (MC2) zugeführt werden, die vom Anteil an Metallstoffen (MM) befreit sind, wobei die Zentrifuge so beschaffen ist, dass sie den Anteil an synthetischen Stoffen (MS) von dem Anteil an zellulosehaltigen Stoffen (MC) durch unterschiedliche Massendichte trennt, so dass der Anteil an synthetischen Stoffen (MS) durch Absaugen und der mit Wasser vermischte Anteil an zellulosehaltigen Stoffen (MC) durch Schwerkraft gewonnen werden.

25. Anlage nach Anspruch 24, **dadurch gekennzeichnet, dass** die Zentrifuge (240) eine feststehende Trommel (242) umfasst, die mit einem kalibrierten Sieb (243) in ihrem unteren Teil versehen ist, und einen Rotor (244) hat, der sich in der Trommel (242) dreht und mit Schlagblättern (245) und einem Abstreifer (246) ausgestattet ist, wobei die Schlagblätter (245) so beschaffen sind, dass sie den Anteil an synthetischen Stoffen (MS) von dem Anteil an zellulosehaltigen Stoffen (MC) durch Schlagen trennen, und der Abstreifer (246) so beschaffen ist, dass der Anteil an zellulosehaltigen Stoffen (MC) zwangsläufig durch das Sieb (243) geführt und anschließend zur Reinigungsstation (27) geleitet wird.

26. Anlage nach Anspruch 25, **dadurch gekennzeichnet, dass** das Sieb (243) ein Kaliber (C3) mit einer maximalen Größe zwischen 4 und 8 mm und vorzugsweise 6 mm festlegt.

27. Anlage nach Anspruch 25, **dadurch gekennzeichnet, dass** der Rotor (244) so beschaffen ist, dass er sich mit hoher Geschwindigkeit zwischen 900 und 1000 U/min dreht.

28. Anlage nach Anspruch 14, **dadurch gekennzeichnet, dass** die Reinigungsstation mindestens eine Klärwanne (26) zum Abscheiden von leichten Schwebstoffen von dem Anteil an zellulosehaltigen Stoffen (MC) und mindestens einen Reiniger (27) zur mechanischen Trennung der Zellulosefasern von dem Anteil an zellulosehaltigen Stoffen (MC) umfasst, bevor sie als Pulpe (P) in den Kreislauf zur Aufbereitung von Papierbrei zurückgeführt werden.

29. Anlage nach Anspruch 24, **dadurch gekennzeichnet, dass** sie stromabwärts von der Zellulosesortierstation (24) einen Verdichter (29) umfasst, der so beschaffen ist, dass er den Anteil an synthetischen Stoffen (MS) zur Verwertung aufbereitet.

30. Anlage nach Anspruch 28, **dadurch gekennzeichnet, dass** sie vor dem Verdichter (29) eine synthetische Sortierstation (25) umfasst, die so beschaffen ist, dass sie den schweren Anteil von dem leichten Anteil der synthetischen Stoffe (MS) durch unterschiedliche Massendichte trennt.

## Claims

1. Method for treating final materials derived from paper mills, these final materials (M) being collected at the outlet of disintegration machines, called pulpers (2), arranged to comminute, disintegrate, triturate recycled waste paper and cardboard to extract therefrom a paper stock (P) composed of cellulose fibres and water which will feed a paper stock preparation circuit, these final materials (M) further comprising cellulose fibres contaminated with various materials containing at least one fraction of metallic materials (MM), one fraction of synthetic materials (MS) and one fraction of cellulose materials (MC), method in which said final materials (M) loaded with moisture to more than 50% by mass are recovered, in which the treatment operations of said method are carried out on said final materials (M) loaded with moisture, and in which, among said treatment operations, at least the following operations are carried out chronologically:
1) shredding and/or comminuting said final materials (M) loaded with moisture into calibrated packages,
2) mechanically separating said fraction of metallic materials (MM) from said final materials (M), in order to be able to recover it at least partially in the steel industry,
3) mechanical separating said fraction of synthetic materials (MS) from said fraction of cellulosic materials (MC), to be able to recover it at least in plastics processing, and
4) mechanical separating the cellulose fibres from said fraction of cellulosic materials (MC), to be able to recover them by reinjecting them into said circuit for preparing the paper stock of the paper mills.

2. The method according to claim 1, **characterised in that** said final materials (M) loaded with moisture are collected in an amount of 70 to 80% by weight.

3. The method according to claim 1, wherein said final materials further comprise strands (T) formed from wire-like metallic materials and extracted from said pulpers (2), **characterised in that**, among said treatment operations, an operation of shredding and/or comminuting said strands (T) into packages of a gauge (Cl) corresponding to a maximum size of between 150 and 300mm, and preferably equal to 250mm, is carried out, and **in that** said strands reduced into packages (TC1) are added to said final materials (M) loaded with moisture.

4. The method according to any one of the preceding claims, **characterised in that** an operation of shredding and/or comminuting said final materials (M, TC1) into packages of a size (C2), corresponding to a maximum dimension of between 60 and 100mm, and preferably equal to 80mm, is carried out.

5. The method according to claim 4, **characterised in that** a first operation of separating said final materials reduced into packages (MC2) is carried out, in which said fraction of metallic materials (MM) is mechanically separated from the other fractions of synthetic materials (MS) and cellulosic materials (MC).

6. The method according to claim 5, **characterised in that**, to carry out said first separation operation, the difference in magnetism of said materials is used, and the process is carried out in two steps in which, on the one hand, the packages of magnetic metallic materials (MM) and, on the other hand, the packages of non-magnetic metallic materials (MM) are separated.

7. The method according to any one of claims 5 and 6, **characterised in that**, after said first separation operation, a cleaning step is carried out by mechanical vibration to get the said packages of magnetic and/or non-magnetic metallic materials (MM) rid of other remaining cellulosic (MC) and synthetic (MS) materials, and said fraction of cleaned metallic materials (MM) is collected in order to recover it in dedicated industries.

8. The method according to claim 4, **characterised in that** a second operation is carried out for separating said final materials reduced into packages(MC2) rid of said fraction of metallic materials (MM), in which said fraction of cellulosic materials (MC) is separated from the other fraction of synthetic materials (MS).

9. The method according to claim 8, **characterised in that**, in order to carry out the second separation operation, the difference in the mass density of said materials is used, and, on the one hand, the fraction of cellulosic materials (MC) which falls by gravity and, on the other hand, the fraction of synthetic materials (MS) which remains in suspension are collected by suction.

10. The method according to Claim 9, **characterised in that**, in order to carry out said second separation operation, said fraction of cellulose materials (MC) loaded with water is carried out by centrifugation in the presence of water and by simultaneous beating, said fraction of cellulose materials (MC) loaded with water falling through a sieve of a gauge (C3) corresponding to a maximum size of between 4 and 8mm and preferably equal to 6mm, and **in that** the reduced fraction of cellulose materials (MCC3) is conveyed to said paper stock preparation circuit of the paper mills.

11. The method according to claim 10, **characterised in that** the fraction of reduced cellulosic materials (MCC3) is passed through a scrubber (27) to mechanically separate the cellulose fibres forming a pulp (P) from said reduced fraction of cellulosic materials (MCC3) for recover them by reinjecting them into said paper stock preparation circuit of the paper mills.

12. The method according to claim 9, **characterised in that** the fraction of synthetic materials (MS) collected by suction is conveyed to a compactor (29) and a granulating mill (30) to recover them.

13. The method according to Claim 12, **characterised in that**, before the fraction of synthetic materials (MS) is conveyed to a compactor (29) and a granulating mill (30) to recover them, the heavy fraction is separated from the light fraction of said synthetic materials (MS).

14. A treatment plant (1) of final materials derived from paper mills, these final materials (M) being collected at the outlet of disintegration machines, called pulpers (2), arranged to comminute, disintegrate, triturate recycled waste paper and cardboard to extract therefrom a paper stock (P) composed of cellulose fibres and water which will feed a paper stock preparation circuit, these final materials (M) further comprising cellulose fibres contaminated with various materials containing at least one fraction of metallic materials (MM), one fraction of synthetic materials (MS) and one fraction of cellulose materials (MC), said treatment plant being arranged to carry out the treatment method according to any one of the preceding claims and to work on final materials (M) loaded with moisture at more than 50% by mass and preferably between 70 and 80% by mass, and said plant comprising at least:
1) a shredding and/or comminuting station (11, 13) arranged to shred and/or to comminute said ultimate materials (M) loaded with moisture into calibrated packages,
2) a metal sorting station (15, 21) arranged to mechanically separate said fraction of metallic materials (MM) from said final materials (M), to be able to recover it at least partially in the steel industry,
3) a cellulosic sorting station (24) arranged to mechanically separate said fraction of synthetic materials (MS) in order to be able to recover it, at least in plastics processing, from said fraction of cellulosic materials (MC), and
4) a purification station (27) arranged to mechanically separate the cellulose fibres from said fraction of cellulosic materials (MC), to be able to recover them by reinjecting them into said circuit for preparing the paper stock of the paper mills.

15. The plant according to claim 14, said final materials further comprising strands (T) formed from wire-like metallic materials and extracted from said pulpers (2), **characterised in that** said plant comprises at least one shredding and/or comminuting station (11) for metals arranged to shred and/or comminute said strands (T) into packages of a gauge (C1), the maximum size of which is of between 150 and 300mm, and preferably equal to 250mm, and means for adding said strands reduced in packages (TC1) to the final materials (M) loaded with moisture.

16. The plant according to claim 15, **characterised in that** said metal shredding and/or comminuting station (11) comprises at least one metal shredder and/or comminutor (110) provided with a shear rotor (111) completed by a fixed cutting grid (115) located downstream of said shear rotor and defining said gauge (C1).

17. The plant according to claim 16, **characterised in that** the shear rotor (111) of said metal shredder and/or comminutor (110) is arranged to rotate at a low rotational speed of the order of 20rpm, deploy a high power of the order of 250kW; and process strands (T) whose maximum size is less than or equal to 600mm.

18. The plant according to any one of claims 14 to 17, **characterised in that** it comprises at least one universal shredding and/or comminuting station (13) arranged to shred said final materials (M, TC1) into packages of a gauge (C2), the maximum size of which is between 60 and 100mm, and preferably equal to 80mm.

19. The plant according to claim 18, **characterised in that** said universal shredding and/or comminuting station (13) comprises at least one universal shredder and/or comminutor (130) provided with a shear rotor (131) and completed by a fixed perforated grid (135) located downstream of said shear rotor (131) and defining said gauge (C2).

20. The plant according to claim 18, **characterised in that** said metal sorting station comprises a magnetic metal sorting station (15) comprising at least one magnetic field separator arranged to separate said fraction of magnetic metallic materials (MM) from the other fractions of non-magnetic metallic materials (MM), synthetic material (MS) and cellulosic material (MC) contained in said final materials reduced in packages (MC2).

21. The plant according to claim 18, **characterised in that** said metal sorting station comprises a non-magnetic metal sorting station (21) comprising at least one eddy current separator arranged to separate said fraction of non-magnetic metallic materials (MM) from the other fractions of magnetic metallic materials (MM), synthetic materials (MS) and cellulosic materials (MC) contained in said final materials reduced into packages(MC2).

22. The plant according to any one of claims 20 and 21, **characterised in that** it comprises at least one vibrating conveyor (14) downstream of said universal shredding station (13), and **in that** said magnetic metal sorting station (15) and/or said non-magnetic metal sorting station (21) are located in the path of said vibrating conveyor (14).

23. The plant according to claim 22, **characterised in that** it comprises, downstream of said magnetic metal sorting station (15) and/or said non-magnetic metal sorting station (21), a cleaning station (17) provided with a perforated vibrating belt arranged to get the fraction of metal materials (MM) rid of the other fractions of synthetic materials (MS) and cellulosic materials (MC) remaining.

24. The plant according to claim 18, **characterised in that** said cellulosic sorting station (24) comprises at least one centrifuge (240) supplied with water and with said final materials reduced in packages (MC2) rid of said fraction of metallic materials (MM), said centrifuge being arranged to separate said fraction of synthetic materials (MS) from said fraction of cellulosic materials (MC) by difference in mass density, such that said fraction of synthetic materials (MS) is collected by suction and said fraction of cellulosic materials (MC) mixed with water is collected by gravity.

25. The plant according to claim 24, **characterised in that** said centrifuge (240) comprises a fixed drum (242) provided in its lower part with a calibrated screen (243), a rotor (244) rotating in said drum (242) and provided with beating blades (245) and a scraper (246), said beating blades (245) being arranged to separate by beating said fraction of synthetic materials (MS) from said fraction of cellulosic materials (MC), and said scraper (246) being arranged to force the passage of said fraction of cellulosic materials (MC) through said screen (243) to be sent to the purification station (27).

26. The plant according to claim 25, **characterised in that** said screen (243) defines a gauge (C3) the maximum dimension of which is of between 4 and 8mm and preferably equal to 6mm.

27. The plant according to claim 25, **characterised in that** said rotor (244) is arranged to rotate at high speed between 900 and 1000rpm.

28. The plant according to claim 14, **characterised in that** said purification station comprises at least one flotation tank (26) for separating the floating light materials from said fraction of cellulosic materials (MC), and at least one scrubber (27) for mechanically separating the cellulosic fibres from said fraction of cellulosic materials (MC) before returning them in the form of pulp (P) to said paper stock preparation circuit.

29. The plant according to claim 24, **characterised in that** it comprises, downstream of said cellulosic sorting station (24), a compactor (29) arranged to treat said fraction of synthetic materials (MS) so that it is recovered.

30. The plant according to claim 28, **characterised in that** it comprises upstream of said compactor (29), a synthetic sorting station (25) arranged to separate by mass density difference the heavy fraction from the light fraction of said synthetic materials (MS).
